Europäisches Patentamt

European Patent Office

Office européen des brevets

(19)

(11) Publication number: **0 088 534**
**A1**

(12) **EUROPEAN PATENT APPLICATION**

(21) Application number: **83300777.6**

(22) Date of filing: **16.02.83**

(51) Int. Cl.³: **G 06 F 3/023**

(30) Priority: **25.02.82 US 352442**

(43) Date of publication of application: **14.09.83**
**Bulletin 83/37**

(84) Designated Contracting States: **DE FR GB IT NL SE**

(71) Applicant: **Honeywell Information Systems Inc.,**
**200 Smith Street, Waltham Massachusetts 02154 (US)**

(72) Inventor: **Lee, E. Paul, 17 Minot Avenue, Acton**
**Massachusetts 01720 (US)**
Inventor: **McCormick, Frederick H., 11 Ironwood Street,**
**Billerica Massachusetts 01821 (US)**
Inventor: **Vietmeier, Dennis P., 118 Middlebury Road,**
**Freeport Illinois 61032 (US)**
Inventor: **Harrington, Neal C., 1856 Middlebury Road,**
**Freeport Illinois 61032 (US)**
Inventor: **Clothier, Donald R., 1220 Auburn Court,**
**Rockford Illinois 61103 (US)**

(74) Representative: **Harman, Michael Godfrey et al,**
**Honeywell Control Systems Ltd. Patent Department**
**Charles Square, Bracknell Berks RG12 1EB (GB)**

(54) **Keyboard terminal type identification.**

(57) A CRT terminal comprises a CPU and a keyboard having a key matrix, a microprocessor, and a set of switches. The microprocessor responds to a query (data set ready) signal from the CPU to read the states of the switches, and generate a sequence of characters indicating the particular characteristics of the keyboard. The first character indicates that the characteristics set by the switches are compatible with the microprocessor firmware, and whether the keyboard is hard or soft. The following characters indicate the states of the function keys – auto line feed, local or remote for «hard» (which produces characters in ASCII), plus control, capitals lock, and left and right shift for «soft» (which produces straight binary coded characters).

## KEYBOARD TERMINAL TYPE IDENTIFICATION

This invention relates to terminals and more particularly to identification of a keyboard or a terminal to a computer host system.

Terminal or keyboard identity is normally conferred by a configuration of jumper wires situated on the keyboard in conjunction with a character generator IC chip for character display purposes and/or an ASCII conversion table (Look-up Table) IC chip. Both the character generator (CG) and Look-up Table (LT) are located externally from the keyboard. In order to reconfigure or change the identity of the terminal or keyboard for another use (e.g. use French language keyboard instead of English language keyboard), the jumpers on the keyboard would have to be physically removed or added. Also the CG and/or LT must be removed and replaced with IC chips associated with that specific keyboard configuration. This process requires considerable time, extensive documentation, and hardware retrofit, thereby requiring a vast inventory stock of each type of keyboard.

What is needed is an improved keyboard that can easily be configured to support a variety of product types, thereby substantially reducing specific keyboard inventory stock, both in-house and in the field. Thus substantial savings and a competitive advantage would result.

Accordingly the present invention provides a reconfigurable keyboard having identification means indicative of the particular characteristics of the keyboard, characterized in that the identification means comprise a set of switches, and control means responsive to a query signal to read the state of the switches and construct a code character having a first portion which identifies the states of the switches and a second portion which identifies the particular characteristics of the control means.

A CRT terminal embodying the invention will now be described, by way of example, with reference to the drawings in which:

Figure 1 is a block diagram of the CRT terminal; and

Figure 2 is a block diagram of the keyboard of the terminal.

INTRODUCTORY SUMMARY

The terminal comprises a host computer, a standard terminal keyboard, means for configuring the keyboard for a number of predetermined products, and means for identifying its configuration and for providing status information to the terminal or host computer system as required. This is accomplished by providing interface means to send data interface signals comprising an identifier sequence after initially being polled by the host computer. Upon receipt of this identifier sequence, the host computer will know what type of keyboard it has attached, whether that keyboard is on-line or off-line, and the mode in which the keyboard is operating.

By assigning a unique eight bit code (byte) to each specific configuration of the keyboard, the host system is able to poll at will all the keyboards to which it is coupled simply by toggling a signal on the keyboard which has been named the Data Set Ready signal. This toggling commands the keyboard to identify itself by transmitting its identifier (ID) byte. A five position DIP switch, mounted on the keyboard, determines the five least significant bits (0-4) for the identifier byte, whereas the three most significant bits (5-7) are preset by the keyboard firmware.

DETAILED DESCRIPTION

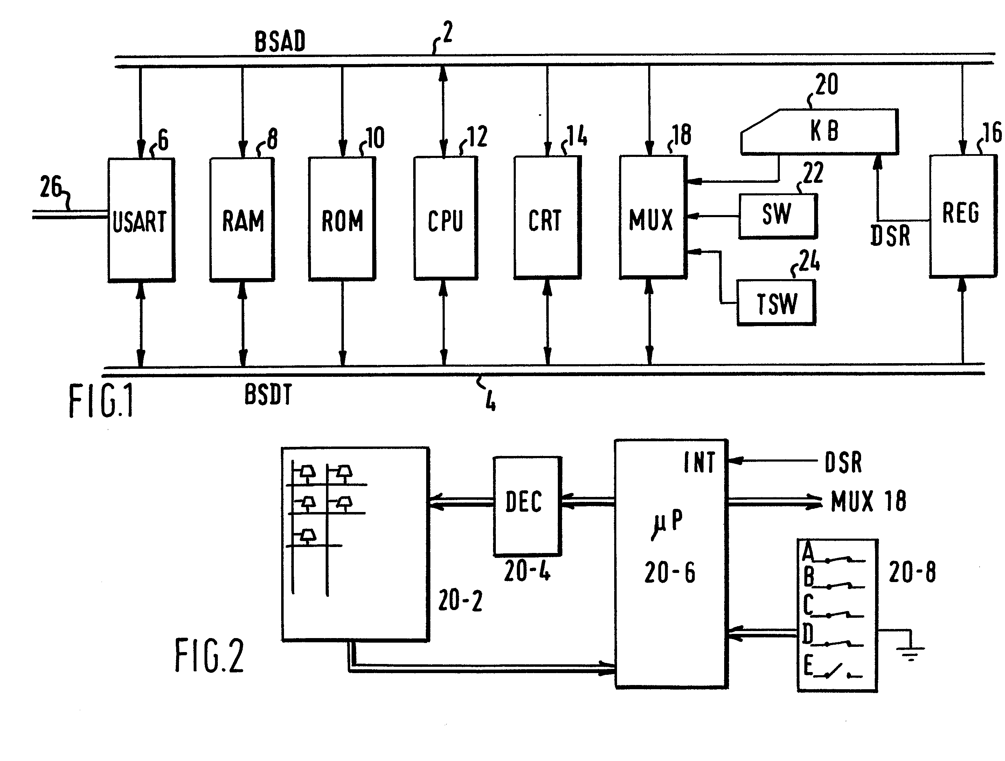

Figure 1 is a block diagram of the CRT terminal. A central processing unit (CPU) 12 controls the terminal operation in conjunction with a read only memory (ROM) 10 which stores programs and a random access memory (RAM) 8 which stores variable information, all coupled in common to a 16-bit address bus BSAD 2 and an 8-bit data bus BSDT 4. A universal synchronous/asynchronous receive and transmit device (USART) 6 coupled to address bus 2 and data bus 4 transfers information between remote terminals or host processors and the CRT terminal via communication lines 26. A CRT 14 coupled to address bus 2 and data bus 4 displays information received over data bus 4 on a cathode ray tube display.

In a typical operation, the USART 6 may receive data from the communication lines 26 and inform the CRT terminal by interrupting the CPU 12. CPU 12 addresses the ROM 10 to address a program. The instructions of the program appear on the data bus 4 and are received by the CPU 12 which executes the instructions. This results in the data received by the USART 6 over communication lines 26 being stored in RAM 8 in address locations specified by the CPU 12 and then displayed on the screen of CRT 14.

Also coupled to the address bus 2 and the data bus 4 is a multiplexer MUX 18 which is coupled to a keyboard KB 20. A switch box SW 22 and test switches TSW 24 are also coupled to the multiplexer. The test switches 24 are used during a maintenance operation to test the CRT terminal. The keyboard 20 is used by an operator to enter data manually. Under CPU 12 control, operator-entered data via keyboard 20 appears on data bus 4 via MUX 18 and is stored in RAM 8 at address locations specified by CPU 12.

A register 16 can be selected, by being addressed over the address bus BSAD 2, to store a data word received over the data bus BSDT 4. The register 16 recognizes and decodes certain data words. Specifically, the register is addressed by address $0806_{16}$, and decodes a data word $10_{16}$ to generate a Data Set Ready signal DSR which is fed to the keyboard 20.

Figure 2 shows the keyboard 20 in more detail. There is a maximum of 112 keys wired in a 16 x 7 matrix in a keyboard key matrix 20-2. The keyboard 20 is controlled by a microprocessor 20-6. A decoder 20-4 accepts 4-bit signals from microprocessor 20-6 to energize 1 of 16 select lines to query the keyboard key matrix 20-2. A key depressed in a selected line would generate an appropriate signal on one of seven lines (each of which has a 1 kΩ grounding re-

sistor, not shown) which are connected back to the microprocessor 20-6. Each key depression results in a corresponding 1-out-of-7 code being received by the microprocessor 20-6 and an appropriate ASCII code or other desired code sent out to data bus BSDT 4 via the MUX 18.

A Dual Inline Package (DIP) set of five switches A-E 20-8 is connected to the microprocessor 20-6. A particular switch configuration identifies the keyboard 20 as to some of the codes put out when certain keys of keyboard key matrix 20-2 are depressed. For example, this flexibility is needed where the CRT terminal 1 is installed in different countries. This allows for a single keyboard design which may be adapted to the coding in different countries by changing the switch 20-8 configuration. This flexibility is also needed when the keyboard 20 is used in different CRT terminal products or for different CRT terminal applications.

The CPU 12 forces the DSR (Data Set Ready) signal by sending out the register 16 selection address $0806_{16}$ on the address bus 2 for activating register 16 and writing $10_{16}$ on the data bus. The DSR signal, of at least 150 µs, applied to the interrupt terminal of microprocessor 20-6 forces a microprocessor sequence which reads the state of the switches A-E of switch bank 20-8 and the state of the auto line feed and local keys and transfers the information to CPU 12, which verifies that the keyboard 20 will send out the proper data codes.

The flow sequence of system operations which verify that the switch 20-8 settings (A to E) correctly identify the keyboard 20 which is part of the CRT terminal, and also indicate to the CPU 12 whether the auto line feed or local keys are activated, will now be described. It will be assumed that the keyboard 20 has an identification number of $C2_{16}$, which is established by switch 20-8 settings of 00001 (ABCDE).

The operations are initiated by a DSR Set signal received by the USART 6 from the communication line 26, or during a power-up sequence of the CRT terminal. The CPU 12 will in due course query the USART 6 for its status, and will receive the DSR Set signal status over the data bus 4. In response to this, it will load the register 16 as already discussed. Also, it will send a selection address $0800_{16}$ on bus 2 to select the MUX 18 and set this MUX to couple the output signals from the keyboard 20 to the data bus 4.

The DSR signal from register 16, applied to the interrupt input of the microprocessor 20-6, causes the microprocessor to load the five switch settings into an internal accumulator, and then test each bit in turn. Bits A to D are tested to see whether each is 0; if any is 1, the microprogram branches to a hold state, which is a signal for field maintenance personnel to intervene. The last bit, bit E, is also tested, and the state of this switch indicates whether the keyboard is "hard" or "soft". A 0 indicates a "soft" keyboard, for which the coded output on data bus 4 of the keyboard 20 identifies the key number of key matrix 20-2. A 1 indicates a "hard" keyboard, for which the coded output on data bus 4 of keyboard 20 is an ASCII character, a "hard" keyboard. For this example, the keyboard 20 is assumed to be "hard" and generate ASCII characters.

With bit E being 1, an address register RO (not shown) in the microprocessor 20-6 is loaded with $42_{10}$, which is the address within the random access memory (RAM) (not shown) of the microprocessor into which the keyboard identification characters are written. The keyboard identification character $C2_{16}$, $1100\ 0010_2$, is now generated; the top three bits of this are generated by firmware within the microprocessor, and the bottom five bits are generated from the switch 20-8 settings (00001) by adding 1 (which gives 00010). This character $C2_{16}$ is written into the microprocessor RAM at address $42_{10}$ as determined by the address register RO.

Next, RO is loaded with address $37_{10}$, and a stop byte $91_{16}$ is written into the microprocessor RAM at that address. RO is next incremented to address $38_{10}$, and the condition

of the local key of the keyboard is examined. If this key is not activated, then $8B_{16}$ is written into the RAM at address $38_{10}$; if this key is activated, then $8C_{16}$ is written into that address. The CRT terminal is placed in a remote mode by the CPU 12 receiving the $8B_{16}$ code; during the remote mode, the CRT terminal is on line with the communication line 26. The CPU puts the terminal in an off line mode in response to the $8C_{16}$ code.

Register RO is next incremented to address $39_{10}$, and the position of the auto line feed key is inspected. A code of $8D_{16}$ or $8E_{16}$ is written into this address, depending on whether or not this key is activated. If it is activated, the CPU 12 will respond to the $8D_{16}$ code by sending two characters, a carriage return and a line feed, to start the next line on the CRT display of CRT 14 when the return key is depressed. If the auto line feed key is not activated, then in an $8E_{16}$ code is loaded into address location $39_{10}$, and the CPU 12 when receiving the $8E_{16}$ code will send only a carriage return when the return key is depressed.

Register RO is next incremented to address $40_{10}$ and the keyboard identification characters $C2_{16}$ are then loaded into address location $40_{10}$ from address location $42_{10}$. This puts the keyboard identification characters in the proper sequence for later transfer to the CPU 12. Register RO is next incremented to $41_{10}$ and the start byte $90_{16}$ is loaded into location $41_{10}$.

Next, the number of characters, 5, indicating the number of codes to be transferred to CPU 12 from keyboard 20, is loaded into a register R1 in the microprocessor 20-6. The 5 codes are now sent to the CPU 12 by initially sending the start code $90_{16}$ stored in location $41_{10}$, decrementing register RO, decrementing register R1, and testing register R1 for $0_{10}$. If register R1 does not store $0_{10}$, then the firmware loops back to send the next code to CPU 12. The microprogram is completed after the fifth character, stop code $91_{16}$, is sent to CPU 12 and register R1 is decremented

to $0_{10}$. The keyboard is inoperative during the transmission of the above 5 code sequence.

The character sequence generated for a "soft" keyboard identifier sequence is as follows:

| Character No. | Character | Description of Character |
|---|---|---|
| 1 | 90 | Start |
| 2 | C1 | ID, identification |
| 3 | 8D | no auto line feed |
| 4 | 8B | remote |
| 5 | 95 | no control |
| 6 | 8A | capitals lock |
| 7 | 93 | no left shift |
| 8 | 87 | no right shift |
| 9 | 91 | Stop |

This sequence informs the host that the keyboard is a "soft" version (i.e. key location code). In this version automatic line feed is not set, the shift and control keys are inactive, the caps lock key is active and the keyboard is in remote mode. The sequence is initiated by the host toggling the DSR line. This line remains at 1 for approximately 150 µs, then, after returning to 0, it does not change for at least another 150 µs. This combined 300 µs give the keyboard ample time to set up all the information. Approximately 15 ms after the DSR line is set to 0, the first of nine 20 µs strobe pulses appears. This occurs when the first character, $90_{16}$, is on the data bus BSDT. The data bus lines then change, at between 5 µs and 40 µs before the second strobe, which occurs about 12 ms after strobe 1. This second strobe pulse signals the host that the identifier (ID) byte is available to be read. The next six succeeding strobes will permit the reading of the following statuses: (a) automatic line feed, (b) local/remote, (c) control, (d) caps lock, (e) left shift key, and (f) right shift. The ninth and last strobe signals the final byte in the sequence - the stop byte $91_{16}$. No interruption occurs during this sequence and any keys that are actuated during this time are ignored.

The character sequence generated for a "hard" keyboard is as follows:

| Character No. | Character | Description of Character |
| --- | --- | --- |
| 1 | 90 | Start |
| 2 | C2 | ID, identification |
| 3 | 8E | Auto line feed |
| 4 | 8C | Local |
| 5 | 91 | Stop |

This "hard" keyboard is developed by setting switch E of the switch set 20-8 to generate a 0. The keyboard 20 analyzes the DIP switch settings and determines the identifier byte, which in this case is $C2_{16}$ (in contrast to C1 for a "soft" keyboard). The flow sequence of system operation is similar to that described for the "soft" setting, though somewhat shorter. The only notable difference between the character sequence for "hard" and "soft" keyboards is that the "hard" sequence is somewhat shorter. The control, caps, lock and shift key functions are not applicable to the host since all their necessary functions are completed internally in this type of keyboard. This is because the keyboard transmits the true ASCII code of each character, less the keyboard status information required by the host CPU 12.

CLAIMS

1. A reconfigurable keyboard having identification means indicative of the particular characteristics of the keyboard, characterized in that the identification means comprise a set of switches, and control means responsive to a query signal to read the state of the switches and construct a code character having a first portion which identifies the states of the switches and a second portion which identifies the particular characteristics of the control means.

2. A keyboard according to Claim 1, characterized in that the state of one of the switches determines whether the keyboard is hard or soft, and the control means includes that information in the code character and generates a series of following codes which, in dependence on whether the keyboard is hard or soft, indicate the state of the relevant function keys of the switchboard.

3. A keyboard according to either previous claim, characterized in that the control means determine whether or not the states of the switches indicate a characteristic compatible with the particular characteristics of the control means.

FIG.1

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | US-A-3 789 364 (DONALD J. MOSES) * Figure 1; column 1, lines 5-39; column 2, line 22 - column 3, line 8; claim 1 * | 1,3 | G 06 F 3/023 |
| Y | US-A-3 158 317 (BUNKER RAMO CORPORATION) * Column 2, lines 45-62; column 6, lines 66-68; column 9, lines 20-43; claim 1; figures 2,3,4 * | 1,3 | |
| Y | IEEE TRANSACTIONS ON NUCLEAR SCIENCE; vol. NS-20, no. 3, June 1973, pages 531-535, New York, USA B.L. HARTWAY: "A compact programmable control panel for computer control systems" * Page 534 * | 3 | |
| A | WO-A-8 001 725 (TELXON CORP.) * Abstract, page 9, line 20 - page 10, line 6; page 11, lines 6-10; page 19, lines 15-18; page 20, line 17 - page 22, line 18; figures 1,2A,6 * | 1 | TECHNICAL FIELDS SEARCHED (Int. Cl. ³) G 06 F |
| A | US-A-4 200 913 (KUHAR et al.) * Figures 1,2; column 3, lines 1-26 * | 2 | |

---  -/-

The present search report has been drawn up for all claims

| Place of search THE HAGUE | Date of completion of the search 02-06-1983 | Examiner BECKER K.H. |
|---|---|---|

| | DOCUMENTS CONSIDERED TO BE RELEVANT | | Page   2 | |
|---|---|---|---|---|
| Category | Citation of document with indication, where appropriate, of relevant passages | Relevant to claim | CLASSIFICATION OF THE APPLICATION (Int. Cl. ³) | |
| A | US-A-3 697 693  (DESCHENES et al.)<br>*   Abstract;  figures  2,4,6,10; column  18,  line  1 - column 20, line 4; claims 1,14 *.<br><br>----- | 1 | | |
| | | | TECHNICAL FIELDS SEARCHED (Int. Cl. ³) | |
| | The present search report has been drawn up for all claims | | | |
| Place of search<br>THE HAGUE | Date of completion of the search<br>02-06-1983 | | Examiner<br>BECKER K.H. | |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503. 03.82